# EUROPEAN PATENT SPECIFICATION

(11) **EP 3 674 425 B1**
(45) Date of publication and mention of the grant of the patent: **04.05.2022**
(21) Application number: 18461659.7
(22) Date of filing: 31.12.2018
(51) Int. Cl.: C21D 9/52, C21D 6/00, C21D 1/28, C21D 1/30, C22C 38/02, C22C 38/04, C22C 38/14, C21D 8/06, F16L 11/08, C21D 1/26, C21D 1/32, C22C 38/10, C22C 38/16, C22C 38/18, C22C 38/12, C21D 1/18, C21D 1/25, C22C 38/08

(54) **STEEL WIRE**
STAHLDRAHT
FIL D'ACIER

(43) Date of publication of application: 01.07.2020
(73) Proprietor: Baker Hughes Energy Technology UK Limited, Bristol BS48 1BS (GB)
(72) Inventor: KUKOLOWICZ, Lukasz Marek, Newcastle-upon-Tyne, Tyne and Wear NE6 3PF (GB)
(74) Representative: Novagraaf Group

(56) References cited:
- JP-A- H 042 720
- JP-A- H01 279 710
- JP-A- H03 274 227
- JP-A- H03 281 724
- JP-A- H03 281 725

## Description

The present invention relates to a steel wire. In particular, but not exclusively, the present invention relates to a steel wire for reinforcing a flexible pipe. The present invention also relates to a method for producing a steel wire.

### BACKGROUND

Traditionally flexible pipe is utilised to transport production fluids, such as oil and/or gas and/or water, from one location to another. Flexible pipe is particularly useful for connecting a sub-sea location (which may be deep underwater) to a sea level location. Flexible pipe is generally formed as an assembly of a flexible pipe body and one or more end fittings. The pipe body is typically formed as a combination of layered materials that form a pressure-containing conduit. The pipe structure allows large deflections without causing bending stresses that impair the pipe's functionality over its lifetime. The pipe body is generally built up as a combined structure including metallic and polymer layers.

Unbonded flexible pipe can been used in deep water (less than 3,300 feet (1,005.84 metres)) and ultra-deep water (greater than 3,300 feet) environments. The increasing demand for oil has caused exploration to occur at greater and greater depths where environmental factors are more extreme. For example, in such deep and ultra-deep water environments the ocean floor temperature increases the risk of conveyed fluids cooling to a temperature that may lead to pipe blockage. Increased depths also increase the pressure associated with the environment in which the flexible pipe must operate.

Transporting of production fluids, such as oil and gas, is known to often lead to various layers of the flexible pipe being subject to relatively acidic conditions. This may be known as "sour service". Certain production fluids are relatively high in concentrations of hydrogen sulphide (H₂S). The presence of hydrogen sulphide may cause a number of problems, for example corrosion, and cracking of layers of the flexible pipe.

One issue that may affect the performance and lifetime of a flexible pipe is cracking of one or more of the layers within the pipe. In particular, wet hydrogen sulphide cracking may be caused by the presence of hydrogen sulphide. This can occur when the steel pipe is exposed to a wet hydrogen sulphide environment. During wet H2S cracking, atomic hydrogen from, for example, wet H2S corrosion reactions can diffuse into the steel and collect in the location of inclusions or impurities within the steel. The presence of H2S in the pipe environment prevents the hydrogen recombination reactions that would normally occur, thus allowing individual hydrogen atoms to enter the steel rather than combining outside it. The presence of atomic hydrogen within the steel can cause weakness in the locations at which the hydrogen collects. In particular, the combination of hydrogen atoms into gaseous hydrogen (H₂) molecules at the site of inclusions in the steel can create pressure within the metal. This can result in reduced ductility, toughness and tensile strength, and can ultimately result in hydrogen induced cracking (HIC).

Another issue that may result from the presence of H2S is sulphide stress cracking (SSC). Like HIC, this is caused by hydrogen diffusing into the steel and collecting in the location of inclusions, impurities, or locations of high local stress within the steel. SSC usually occurs under stress conditions, in particular under tensile stress present within the steel. SSC often occurs in the region of welds. Atomic hydrogen may collect in the region surrounding a weld, and cracking may be initiated as a result.

Tight control of non-metallic inclusions has been previously been used as a means of improving the resistance of a steel wire to cracking. This has included employing various cleanliness practices so as to limit the presence of elements such as sulphur and phosphorus within the steel. For example, production of a steel with a very low amount of sulphur (for example, less than 0.003 wt%) can be used. However, limiting the amount of sulphur to such an extent increases the production cost of a steel wire, and causes significant processing difficulties.

Using a calcium treatment during steel production (or other, similar inclusion-shape-controlling additions) can also be used to control the shape of the inclusions. However, the additions of calcium (or similar) can result in undesirably large, round inclusions. JP H03 281724 A, JP H01 279710 A, JP H03 274227 A, JP H03 281725 A and JP H04 2720 A disclose wires for flexible pipes.

### SUMMARY OF THE INVENTION

The invention is defined in the appended claims.

According to a further aspect of the present invention there is provided a method of producing a layer of a flexible pipe, said method comprising providing at least one steel wire as detailed above, and helically winding the at least one steel wire around an underlying layer of flexible pipe body.

According to a further aspect of the present invention, there is also provided a flexible pipe comprising flexible pipe body, wherein the flexible pipe body comprises at least one layer comprising the at least one steel wire defined above, and further comprising at least one end fitting at at least one end of the flexible pipe.

### FIGURES

Embodiments of the invention are further described hereinafter with reference to the accompanying drawings, in which:
Figure 1 illustrates a flexible pipe body comprising at least one part formed from a steel wire in accordance with an embodiment of the present invention;
Figure 2 illustrates how portions of flexible pipe can be utilised as a flow line 205 or jumper 206;
Figure 3 illustrates a number of exemplary and non-limiting process routes for producing a steel wire in accordance with embodiments of the present invention.

### DETAILED DESCRIPTION OF THE INVENTION

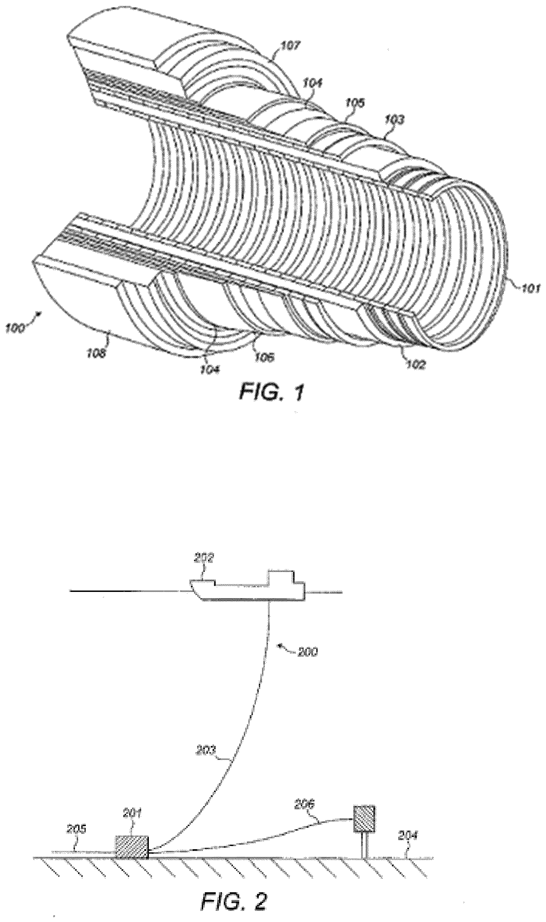

Throughout this description, reference will be made to a flexible pipe. It will be understood that a flexible pipe is an assembly of a portion of a pipe body and one or more end fittings in each of which a respective end of the pipe body is terminated. Figure 1 illustrates how pipe body 100 is formed from a combination of layered materials that form a pressure-containing conduit. Although a number of particular layers are illustrated in Figure 1, it is to be understood that the present invention is broadly applicable to coaxial pipe body structures including two or more layers manufactured from a variety of possible materials. It is to be further noted that the layer thicknesses are shown for illustrative purposes only.

As illustrated in Figure 1, a pipe body includes an optional innermost carcass layer 101. The carcass provides an interlocked construction that can be used as the innermost layer to prevent, totally or partially, collapse of an internal pressure sheath 102 due to pipe decompression, external pressure, and tensile armour pressure and mechanical crushing loads. It will be appreciated that certain embodiments of the present invention are applicable to "smooth bore" operations (i.e. without a carcass) as well as such "rough bore" applications (with a carcass).

The internal pressure sheath 102 acts as a fluid retaining layer and comprises a polymer layer that ensures internal fluid integrity. It is to be understood that this layer may itself comprise a number of sub-layers. It will be appreciated that when the optional carcass layer is utilised, the internal pressure sheath is often referred to by those skilled in the art as a barrier layer. In operation without a carcass (smooth bore operation) the internal pressure sheath may be referred to as a liner.

An optional pressure armour layer 103 is a structural layer with a lay angle close to 90° that increases the resistance of the flexible pipe to internal and external pressure and mechanical crushing loads. The layer also structurally supports the internal pressure sheath, and typically consists of an interlocked construction. The pressure armour layer 103 may comprise a composite material comprising a polymer matrix and a plurality of reinforcement fibres. Such a composite material may optionally be bonded to the underlying internal pressure sheath layer 102.

The flexible pipe body also includes an optional first tensile armour layer 105 and optional second tensile armour layer 106. Each tensile armour layer is a structural layer with a lay angle typically between 10° and 55°. Each layer is used to sustain tensile loads and internal pressure. Where more than one tensile armour layer is present, the tensile armour layers are often counter-wound in pairs.

It will be appreciated that the flexible pipe body may also include further layers. For example, the flexible pipe body may contain optional layers of tape 104 which help contain underlying layers and to some extent prevent abrasion between adjacent layers. The flexible pipe body also typically includes optional layers of insulation 107 and an outer sheath 108 which comprises a polymer layer used to protect the pipe against penetration of seawater and other external environments, corrosion, abrasion and mechanical damage.

Each flexible pipe comprises at least one portion, sometimes referred to as a segment or section of pipe body 100 together with an end fitting located at at least one end of the flexible pipe. An end fitting provides a mechanical device which forms the transition between the flexible pipe body and a connector. The different pipe layers as shown, for example, in Figure 1 are terminated in the end fitting in such a way as to transfer the load between the flexible pipe and the connector. Figure 2 illustrates how portions of flexible pipe can be utilised as a flow line 205 or jumper 206.

### Steel

In accordance with one aspect of the present invention, there is provided a steel wire. The steel wire may be used for reinforcing a flexible pipe. For example, the steel wire may be used to form at least one layer of a flexible pipe. Use of the steel wire in accordance with the present invention may enhance the resistance of a flexible pipe to environmental degradation by, for example, hydrogen sulphide. The flexible pipe in accordance with the present invention may have an improved resistance to cracking.

The present inventors have found that the inclusion of elements such as titanium and zirconium in a steel wire may provide an improved resistance to degradation by hydrogen sulphide. In particular, the steel wire in accordance with the present invention may have an improved resistance to cracking, such as hydrogen induced cracking and sulphide induced stress cracking, in environments in which hydrogen sulphide is present. By producing a flexible pipe having at least one layer formed from the steel wire in accordance with the invention, reliability of the flexible pipe may be increased. Given that flexible pipes for use in subsea conditions are required to be able to withstand extreme conditions over prolonged periods of time, reliability of the pipes is of great importance. The elemental composition of the steel wire in accordance with the present invention may also allow for the use of a reduced flexible pipe thickness, and therefore weight, given the improved reliability of pipe layers formed from said wire. The elemental composition detailed herein may also allow a steel for use in the presence of hydrogen sulphide to be produced without the need for rigorous cleaniless procedures, such as maintaining the level of sulphur at a very low level, that are usually required in the manufacture of such steel.

Without wishing to be bound by theory, it is believed that the structure of the steel wire in accordance with the present invention may enable cracking processes such as HIC and SSC to be reduced, minimized or prevented. In particular, the structure of the steel wire in accordance with the invention may reduce, minimize or prevent the occurrence of hydrogen embrittlement processes within the steel. The steel wire in accordance with the present invention may have a microstructure in which the presence and/or size of inclusions is controlled. The present inventors have found that, by tailoring the presence of certain elements within the steel, an optimized microstructure may be achieved.

One structural feature commonly present in steel wire that may promote crack propagation is grain boundary (allotriomorphic) ferrite, which forms primarily as a thin layer at austenite grain boundaries. For example, HIC is known to initiate from inclusions located at ferrite grain boundaries. Without wishing to be bound by theory, it is believed that cracking may occur in the region of ferrite grain boundaries as a result of the difference in mechanical properties of ferrite and pearlite. The presence of micro-voids occurring near large cementite (iron carbide) particles located at ferrite-pearlite boundaries may also contribute to cracking processes such as HIC and SSC, as hydrogen may collect in said micro-voids.

In the method of producing a steel wire in accordance with the present invention, a fine dispersion of inclusions is formed by microalloying. These inclusions may act as intergranular nucleation spots for acicular ferrite. As a result, a smaller portion of grain boundary ferrite is produced, and grain boundary ferrite is not formed in a continuous layer along grain boundaries within the steel. In addition, the disorientated structure of acicular ferrite within the steel may help with crack tip deflection and termination.

The steel used in accordance with the present invention has a particular microstructure. The microstructure within the steel may comprise at least one structure selected from layers, lamellae, plates, needles, crystallites or other such grains. For example, the steel may include regions of a pearlite microstructure. This is a layered structure composed of alternating layers of ferrite and cementite. The percentage amount of pearlite within the steel is at least 50 %, preferably at least 60 %, for example at least 75 %. In one example, the percentage amount of pearlite within the steel may be at least 90 %. The percentage amount of a specific structure, such as pearlite, is measured as the percentage area. The percentage area is measured by any suitable method, for example by viewing a cross-section of the steel under a microscope. The steel is measured at a magnification sufficiently high to enable at least some of the structures within the steel to be resolvable. The steel may also comprise other structures, for example acicular ferrite, and/or martensite, and/or bainite. The steel comprises allotriomorphic ferrite in a percentage amount of less than 15%, preferably less than 10%, for example less than 5%. The amount of allotriomorphic ferrite in the steel may be dependent upon the amount of carbon present in the steel. Where a lower percentage of carbon is included in the steel, the percentage of allotriomorphic ferrite may be higher. The steel may comprise martensite and/or bainite in a percentage amount of less than 50%, preferably less than 30%, for example less than 15%.

The microstructure of the steel may be such that at least a proportion of the structures present in the steel cannot be optically resolved at a magnification of, for example, 300X when viewed through a typical optical or digital laboratory microscope, for example Olympus BX series equipment. In accordance with this definition, certain structures, for example pearlite, are not visible when viewed under a magnification of 300X. Examples of larger structures present in steel that it may be possible to individually distinguish at a magnification of 300X include grain boundary ferrite, martensite or bainite grains, and non-metallic inclusions.

NACE standards are a means of assessing the ability of a steel wire to be used in a hydrogen sulphide environment. The steel wire in accordance with the present invention may successfully pass the NACE test method TM 0177, which relates to the effects of stress corrosion cracking, i.e. SSC, with stress applied at at least 90 % of the actual yield strength of the material. The steel wire in accordance with the present invention may additionally or alternatively pass the NACE test method TM0284, which relates to the cracking effects induced by hydrogen, i.e. HIC, in the absence of stress in the test samples. Further guidance on sour service and testing methods can be found in the ISO 15156 standards. The steel wire in accordance with the present invention can successfully pass the NACE test method TM 1077 at an H₂S level of at least 0.002 bar resp. 0.0002 MPa, and aptly at least 0.005 bar resp. 0.0005 MPa, for instance at least 0.01 bar resp. 0.001 MPa, or at least 0.02 bar resp. 0.002 MPa, and at a pH of less than 5.5, aptly at least as low as 4.5, for example at least as low as 4.0. Additionally or alternatively, the steel wire in accordance with the present invention can successfully pass the NACE test method TM0284 at an H₂S level of at least 0.002 bar resp. 0.0002 MPa, and aptly at least 0.005 bar resp. 0.0005 MPa, for instance at least 0.01 bar resp. 0.001 MPa, or at 0.02 bar resp. 0.002 MPa, and at a pH of less than 5.5, aptly at least as low as 4.5, for example at least as low as 4.0. In a preferred embodiment, the steel wire in accordance with the present invention can successfully pass both the NACE test methods TM0284 and TM1077 under the conditions detailed above.

The steel wire in accordance with the present is defined in the appended claims.

The percentage weight of carbon (C) in the steel is between 0.30 - 0.80 wt%, preferably between 0.45 - 0.75 wt%, for example between 0.55 - 0.70 wt%. In one embodiment the percentage weight of carbon in the steel is between 0.60 - 0.65 wt%.

The percentage weight of silicon (Si) in the steel is between 0.25 -0.45 wt%, preferably between 0.30 - 0.40 wt%, for example between 0.32 - 0.38 wt%. In one embodiment the percentage weight of silicon in the steel is between 0.34 - 0.36 wt%.

The percentage weight of manganese (Mn) in the steel is between 0.20 - 0.70 wt%, preferably between 0.25 - 0.65 wt%, for example between 0.30 - 0.60 wt%. In one embodiment the percentage weight of manganese in the steel is between 0.35 - 0.50 wt%, for example between 0.40 - 0.55 wt%. Maintaining a level of manganese below 0.70 wt% may be advantageous, as the presence of higher levels of manganese may cause undesirable effects such as temper embrittlement, which may increase the likelihood of cracking. The presence of higher levels of manganese may also result in undesirable banding of the microstructure.

The percentage weight of titanium (Ti) in the steel is between 0.008 - 0.020 wt%, preferably between 0.010 - 0.018 wt%, for example between 0.011 - 0.017 wt%. In one embodiment the percentage weight of titanium in the steel is between 0.012 - 0.016 wt%, for example between 0.013 - 0.015 wt%. The inclusion of titanium in the steel is advantageous because it may allow the formation of fine inclusions of titanium oxide (TiO₂) within the steel. These small inclusions may act as nucleation spots for acicular ferrite within the steel, which can break up areas of grain boundary ferrite.

The percentage weight of zirconium (Zr) in the steel is between 0.001 - 0.004 wt%, preferably between 0.0015 - 0.0035 wt%, for example between 0.002 - 0.003 wt%. In one embodiment the percentage weight of zirconium in the steel is between 0.0022 - 0.0028 wt%, for example between 0.0024 - 0.0026 wt%. The presence of zirconium in the steel is advantageous because zirconium may form submicron oxide inclusions (e.g. ZrO₂) within the melt. These inclusions may have a very low surface tension and, as a result, are not dragged by the solidification front. This may reduce micro-segregation and banding within the microstructure. In particular, zirconium oxides may act as inoculation spots for non-metallic inclusions. This may result in inclusions in the steel being distributed more evenly in the volume of steel.

The inclusion of titanium and zirconium within the steel may advantageously provide a very high density of very fine, non-metallic inclusions. While titanium in itself can provide TiO₂ inclusions, the joint application of titanium and zirconium may lead to a greater refinement of these inclusions. Given that zirconium is a stronger oxide forming element than titanium, ZrO₂ will form first. Without wishing to be bound by theory, it is believed that excess oxygen present after the formation of ZrO₂ may then bind with titanium. TiO₂ may then precipitate onto the ZrO₂ inclusions. These inclusions may then act as intergranular nucleation spots for acicular ferrite, which results in reduced formation of grain boundary ferrite. The inclusion of elements such as titanium and zirconium may not have an adverse effect on other wire properties such as formability and fatigue resistance.

The steel may include further elements. These further elements may comprise at least one selected from sulphur (S), aluminium (Al), phosphorus (P) and nitrogen (N). For example, the steel may comprise up to 0.012 wt% sulphur, preferably up to 0.010 wt% sulphur, for example up to 0.005 wt% sulphur. In one embodiment, the steel may comprise from 0.002 - 0.010 wt% sulphur, for example from 0.004 - 0.008 wt% sulphur. The steel may comprise up to 0.020 wt% phosphorus, preferably up to 0.015 wt% phosphorus, for example up to 0.010 wt% phosphorus. In one embodiment, the steel may comprise from 0.002 - 0.015 wt% phosphorus, for example from 0.008 - 0.010 wt% phosphorus. Maintaining a low percentage amount of phosphorus and/or sulphur in the steel may be desirable. For example, it may be advantageous to limit the amount of phosphorus and or sulphur so as to limit the presence of inclusions or segregations, which may have an undesirable effect on the strength of the steel, for example in relation to hydrogen embrittlement and fatigue behaviour. However, a residual quantity of one or both of phosphorus and/or sulphur may be present.

The steel may comprise up to 0.035 wt% aluminium, preferably up to 0.001 wt% aluminium, for example up to 0.0002 wt% aluminium. The amount of aluminium is maintained at this level because aluminium may bind to available oxygen. As aluminium is a stronger oxide-forming element than titanium, a higher level of aluminium may prevent the formation of titanium oxide inclusions in the steel.

The steel comprises up to 0.005 wt%, preferably 0.001 wt%, for example 0.0005 wt% nitrogen. By maintaining the amount of nitrogen at a low level in the steel, the formation of nitrides may be reduced. As both titanium and zirconium are strong nitride forming elements, it may be desirable to keep the level of nitrogen in the steel to avoid the formation of nitrides. In particular, primary titanium nitrides are large and angular, and may cause cracking and/or internal defects within the steel, and may also promote wear of dies during wire drawing. Control of the nitrogen concentration before and during the addition of titanium and zirconium may be controlled by any suitable process, for example by vacuum degassing. However, secondary titanium nitrides that may form after solidification are smaller (submicron sized), which avoids the problems associated with primary titanium nitrides. As not all the titanium is necessarily depleted from solution after the formation of TiO₂, formation of secondary titanium nitrides may occur through precipitation. The presence of secondary nitrides in the steel may be beneficial, for example, during welding.

The steel may additionally comprise further alloying elements. These further alloying elements may be selected from at least one of chromium, nickel or molybdenum. Tungsten and/or cobalt may also be included. The combination of said further alloying elements should not exceed 0.40 wt% in total, so as to retain the lamellar pearlite microstructure. Preferably, the amount of further alloying elements does not exceed 0.20 wt% in total, for example not more than 0.10 wt% in total.

In terms of said further alloying elements, the steel may comprise up to 0.15 wt% chromium (Cr), preferably up to 0.10 wt% chromium, for example, up to 0.05 wt% chromium. The steel may comprise up to 0.15 wt% nickel (Ni), preferably up to 0.10 wt% nickel, for example, up to 0.05 wt% nickel. The steel may comprise up to 0.10 wt% molybdenum (Mo), preferably up to 0.07 wt% molybdenum, for example up to 0.05 wt% molybdenum. The steel may comprise up to 0.15wt% tungsten (W), preferably up to 0.10 wt% tungsten, for example up to 0.05 wt% tungsten. The steel may comprise up to 0.15 wt% cobalt, preferably up to 0.10 wt% cobalt, for example 0.05 wt% cobalt. The steel may comprise up to 0.15 wt% vanadium (V), preferably up to 0.10 wt% vanadium, for example 0.05 wt% vanadium.

In one embodiment of the present invention the steel wire comprises the following elements: 0.60 - 0.65 % C, 0.25 - 0.30 % Si, 0.4 - 0.7 % Mn, 0.001 - 0.003 % Zr, and 0.01 - 0.02 % Ti. The steel wire may comprise the following elements: 0.60 - 0.65 % C, 0.25 - 0.30 % Si, 0.4 - 0.7 % Mn, 0.005 - 0.015 % S, 0.001 - 0.005 % P, 0.05 - 0.1 % Cr, 0.001 - 0.05 % Al, 0.001 - 0.003 % Zr, and 0.01 - 0.02 % Ti. A non-inventive example of the steel wire composition may comprise approximate quantities of the following elements, as indicated: 0.63% C, 0.25 % Si, 0.65 % Mn, 0.008 % S, 0.003 % P, 0.07 % Cr, 0.030 % Al, 0.002 % Zr, 0.015 % Ti, 50ppm N, 110ppm Nb. A further example of the steel wire composition may comprise approximate quantities of the following elements, as indicated: 0.60% C, 0.28 % Si, 0.45 % Mn, 0.01 % S, 0.008 %P, 0.07 %Cr, 0.001 %AI, 0.08 %Ni, 0.002 %Zr, 0.015 %Ti, and small quantities of V, Co and W.

### Method

The steel wire may be produced by any suitable method. The method of producing a steel wire may include at least one or more of the following techniques: rolling (for example hot rolling and/or cold rolling), drawing, heating, cooling, tempering, quenching, and austenitizing.

In order to produce the steel wire of the present invention, the process preferably includes at least one step of forming or shaping the steel wire. The steel wire may be formed by hot and/or cold wire rolling. During hot wire rolling, steel may be rolled at an elevated temperature. Typically, hot wire rolling may be performed at between 600 and 700 °C, although this is not a limiting range. During wire rolling, steel may be first rolled at a high temperature, such as between 600 and 700 °C, as in a hot rolling process. The steel is then cooled, and then subjected to further processing steps. In one embodiment the steel is then cold rolled to final dimensions at room temperature through at least one cold rolling mill-stand. In a further embodiment, the steel is annealed after cold rolling through the at least one cold rolling mill-stand and before cold rolling through at least a further cold rolling mill-stand. Annealing may take place by heating the cooled steel to a temperature of between about 250 and 750 °C (selected based on the steel composition). The heating may be provided through the use of a furnace into which coils of wire are placed or through which the wire is conducted, or by using electrical resistance or induction methods which are known in the industry. The steel is maintained at the chosen annealing temperature for a suitable period of time which may be calculated by those skilled in the art, using a combination of knowledge of the cross section, the desired annealing temperature, the travel speed of the wire (if the wire is transient through the heating system or location - so-called heating the wire "on the fly"), and the desired properties after annealing. This may require maintaining the wire at the annealing temperature for at least one minute and up to a number of hours. The annealed steel is then cooled over a period of a number of hours (for example, between 1 and 48 hours) before re-commencing cold rolling. The steel wire may be formed by at least one hot rolling process, at least one cold rolling process, or a combination of hot and cold rolling. In one example, the steel wire may be formed by hot rolling, followed by cold rolling.

The steel wire may also be formed or shaped by a drawing process. In one embodiment, a steel wire is produced by passing a steel wire through a die to reduce its cross-section. The initial steel wire may have a larger cross-section or diameter to that of the die. Thus, on passing through the die, the cross-section of the steel wire is decreased, and the length of the wire increased. In one embodiment, one or more drawing steps may be employed. Preferably, a number of drawing steps may be employed. Where a number of drawing steps are used, the cross-section of each successive die preferably decreases, such that the wire becomes increasingly smaller with each drawing step. Drawing may be performed at room temperature (taking into account heating of the wire as a result of the work being performed on it and friction between the steel and the wire drawing dies). Any of the rolling steps detailed above may be followed by one or more drawing steps.

The method of producing a steel wire may comprise at least one heat treatment. Heat treatment of the steel wire may be performed before and/or after the final dimensions of the steel wire are achieved. In the method in accordance with the present invention, the heat treatment may be performed at a temperature of from 150 °C to 1200 °C, preferably from 300 °C to 1000 °C, for example from 500 °C to 800 °C. Once the desired temperature has been reached, the heat treatment may include maintaining the wire at this temperature for a time period of between 10 seconds and 12 hours, preferably between 10 minutes and 7 hours, for example between 1 hour and 5 hours.

In one embodiment, the steel wire is heated prior to a cooling step. This heat treatment involves heating the wire to a temperature of between 300 °C and 1100 °C, preferably between 500 °C and 1000 °C, for example between 600 °C and 900 °C. Once the desired temperature has been reached, the heat treatment includes maintaining the wire at the desired temperature for a time period of between 1 second and 12 hours, alternatively 5 5 seconds and 12 hours, preferably between 10 seconds and 7 hours, for example between 1 hour and 5 hours.

Following each heat treatment, the steel wire may then be cooled by any suitable method. For example, any suitable quenching agent may be employed. Examples of quenching agents include oil, polymer, or water. The wire may be introduced into a bath of one or more of said quenching agents. In one embodiment, the wire may be introduced into a water quench system, using cascades of water. Alternatively, the wire may be allowed to cool in the air. When the wire is quenched using a water bath or a water spray, the wire is typically cooled to below 150 °C in less than 5 seconds. If quenched in this manner the steel wire will typically subsequently be tempered to increase ductility in the steel wire at a temperature of between 150 °C to 600 °C, preferably between 350 °C and 550 °C, for example between 400 °C and 500 °C. Cooling may be controlled such that the temperature is reduced over a period of minutes or hours. It is understood that any of the heating steps used in the method may be followed by a cooling step.

One or more heat treatments may be performed prior to arriving at the final dimensions of the steel. Alternatively or additionally, the steel wire may be subjected to one or more heat treatments after the final wire dimensions have been achieved. The heat treatment or treatments after the final wire dimensions have been achieved may be performed at a temperature of between 100 °C and 800 °C, preferably between 200 °C and 700 °C, for example between 200 °C and 550 °C, and for a time period of between 5 seconds and 20 minutes for heating the wire on the fly.

The heat treatment in accordance with the present invention may be a patenting step. During patenting, the steel wire may be heated to a high temperature, for example in a furnace or a bath. The steel wire may be heated to a temperature of between 300 °C and 1100 °C, preferably between 500 °C and 1000 °C, for example between 600 °C and 900 °C. In one example, the heating stage of patenting is performed at a temperature of 850 °C to 1000 °C. The cooling phase of patenting may be, for example, an isothermal cooling process. For example, heating may be followed by quenching the wire in a bath, for example a molten lead or molten salt bath, at a suitable temperature, for example (for instance 400 °C to 600 °C, for example 500 °C). Alternatively or additionally, the wire may be allowed to cool in the air. In one embodiment, quenching is performed by immersing the wire in a bath at a temperature of between 300 °C and 700 °C, preferably between 400 °C and 600 °C, for example between 450 °C and 550 °C, followed by cooling the wire in water or air.

The method for producing a steel wire may include at least one tempering treatment. The tempering treatment may comprise heating the wire to a temperature of between 150 °C to 600 °C, preferably between 350 °C and 550 °C, for example between 400 °C and 500 °C. Once the desired temperature has been reached, the tempering treatment may include maintaining the wire at this temperature for a time period of between 10 seconds and 10 hours, preferably between 10 minutes and 5 hours, for example between 1 hour and 3 hours. Tempering may be performed, for example, in a bath, for example a molten salt bath, in a furnace, or using resistance or induction heating. At least one tempering treatment may precede or follow any of the heat treatments involved in the method of producing a steel wire.

Any combination of forming and heat treatment steps may be employed in the production of the steel wire in accordance with the invention. For example, a step of forming the wire (e.g. drawing, shaping or rolling) may be followed by a heating step. In one embodiment, a number of forming and heating steps are employed. For example, a forming and a heat treatment step may be followed by a further forming and further heat treatment step. Any number of forming and heat treatment steps may be combined in this way, until the desired wire dimensions are achieved. Alternatively, the final dimensions of the steel wire may be achieved by processes such as drawing, or shape-rolling, following which at least one heat treatment may be performed.

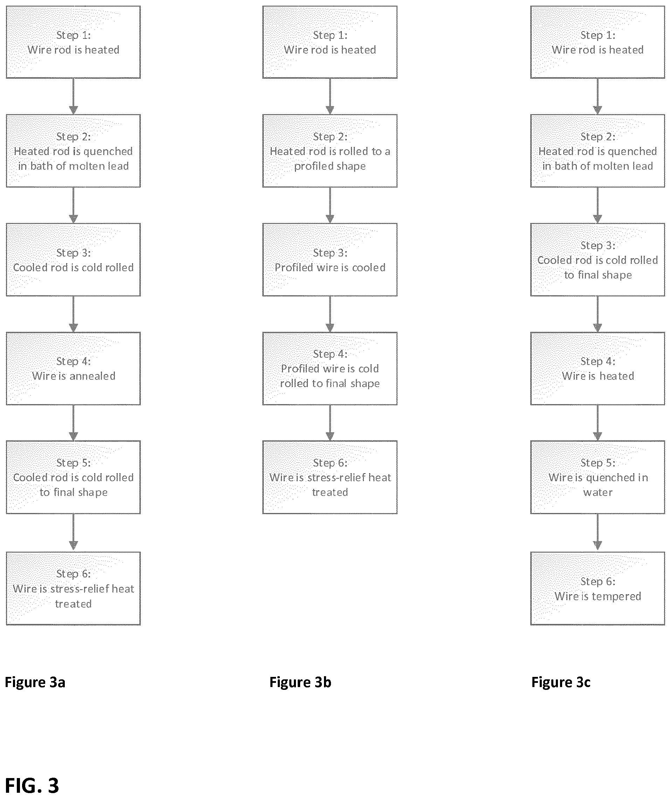

Figure 3a shows one exemplary process route where a wire rod is patented (heated and quenched into a molten bath of lead), subsequently cold rolled through multiple stages, with an annealing heat treatment between cold rolling stages, and finally given a stress-relief heat treatment. Figure 3b shows another exemplary process route where the wire rod is heated and then hot rolled, followed by cooling; the wire is then cold rolled and finally stress relieved using a heat treatment operation. Figure 3c shows a further exemplary process route where the wire rod is heated then quenched in a molten lead bath (patenting), followed by cold rolling, then the wire is quenched and tempered. It is to be understood that the process routes in Figures 3a to 3c are not limiting, and any suitable combination of the processes described above may be employed.

The steel wire formed in accordance with the present invention may be of any suitable width, thickness, or diameter. The steel wire may have a thickness of between 2 to 25 mm, preferably between 4 to 20 mm, for example 8 to 15 mm. The steel wire may have a width of between about 5 to 30 mm, preferably between 10 to 25 mm, for example between 15 to 18 mm. In terms of the thickness and diameters provided herein, these relate to the outer dimensions of the wire. It will be appreciated that the steel wire may have any suitable cross-section. For example, the wire may have a Z-shaped, C-shaped, U-shaped or T-shaped cross-section. These cross-sections may enable the wire to be fitted together during winding to provide an overlap between adjacent windings. Alternatively, the steel wire may have a rectangular or flat shape. The edges of the wire may be rounded.

### Flexible Pipe

The steel wire in accordance with the present invention may be used to form any suitable layer of a pipe, in particular a flexible pipe for use in transporting production fluids such as oil and gas, as may be understood from American Petroleum Institute specification for Unbonded Flexible Pipe API 17J. In accordance with one aspect of the present invention, there is provided a flexible pipe comprising a flexible pipe body, wherein the flexible pipe body comprises at least one steel wire as detailed above and at least one end fitting at at least one end of the flexible pipe. The at least one steel wire may be configured so as to withstand at least one of tensile loading and loading from internal and external pressures.

In one embodiment, the flexible pipe may be used for subsea transportation of production fluids. For example, the steel wire may be used to form a pressure armour layer or a tensile armour layer of a flexible pipe. The steel wire may also be used to form a carcass layer. In one embodiment, a flexible pipe may include at least one layer formed using the wire in accordance with the present invention. In order to form a flexible pipe layer, the steel wire may be helically wound so as to form a continuous layer.

The steel wire may be used to form a tensile armour layer. At least one steel wire may be helically wound around an underlying layer of flexible pipe body at a helix angle of between 20 and 55 degrees to the axis of the flexible pipe. The underlying layer may be a carcass layer, an internal sheath or liner, or a pressure armour layer. Alternatively, the underlying layer may be a further tensile armour layer. In one embodiment, two wires are used. The steel wire used to form a tensile armour layer may have a width of between 5 to 18 mm, preferably between 8 and 15 mm, for example 10 to 12 mm. In one embodiment, the width of the steel wire may be selected from 5 mm, 5 ½ mm, 6 mm, 6 ½ mm, 7 mm, 7 ½ mm, 8 mm, 8 ½ mm, 9 mm, 9 ½ mm, 10 mm, 10 ½ mm, 11 mm, 11 ½ mm, 12 mm, 12 ½ mm, 13 mm, 13 ½ mm, 14 mm, 14 ½ mm, 15 mm, 15 ½ mm, 16 mm, 16 ½ mm, 17 mm, 17 ½ mm and 18 mm. The steel wire used to form a tensile armour layer may have a thickness of between 2 and 8 mm, preferably between 4 and 6 mm, for example 5mm. In one embodiment, the thickness of the steel wire may be selected from 2 mm, 2 ½ mm, 3 mm, 3 ½, 4 mm, 4 ½ mm, 5 mm, 5 ½ mm, 6 mm, 6 ½ mm, 7 mm, 7 ½ mm and 8 mm. Any combination of width and thickness may be employed. Intermediate wire dimensions are not excluded and may optionally be selected. The steel wire used to form a tensile armour layer may be a flat wire and may have a rectangular cross-section. A tensile armour layer formed by winding of the steel wire in accordance with the invention may have gaps between the windings. For example, the steel wire may comprise at least 95% fill, for example 98% fill, of the tensile armour layer. The gaps present between the windings may provide the flexible pipe with improved flexibility. In one embodiment, a flexible pipe may contain at least one tensile armour layer formed in accordance with the above method.

The steel wire may be used to form a pressure armour layer. At least one steel wire may be helically wound round an underlying layer of flexible pipe body at a helix angle of close to 90 degrees. The underlying layer may be a carcass layer, an internal sheath or liner, or a tensile armour layer. Alternatively, the underlying layer may be a further pressure armour layer. The steel wire or wires may have a cross-section that enables the wires to interlock and/or overlap. For example, the steel wire may have a Z-shaped or C-shaped cross-section. The steel wire used to form a pressure armour layer may have a width of between 10 mm to 30 mm, preferably 15 mm to 25 mm, for example 20 mm. In one embodiment, the width of the steel wire may be selected from. 10 mm, 10 ½ mm, 11 mm, 11 ½ mm, 12 mm, 12 ½ mm, 13 mm, 13 ½ mm, 14 mm, 14 ½ mm, 15 mm, 15 ½ mm, 16 mm, 16 ½ mm, 17 mm, 17 ½ mm 18 mm, 18 ½ mm, 19 mm, 19 ½ mm, 20 mm, 20 ½ mm, 21 mm, 21 ½ mm, 22 mm, 22 ½ mm, 23 mm, 23 ½ mm, 24 mm, 24 ½ mm, 25 mm, 25 ½ mm, 26 mm, 26 ½ mm, 27 mm, 27 ½ mm, 28 mm, 28 ½ mm, 29 mm, 29 ½ mm and 30 mm. The steel wire may have a thickness of between 4 mm to 22mm, preferably 8 mm to 18 mm, for example 10 mm to 15 mm. In one embodiment, the thickness of the steel wire may be selected from 4 mm, 4 ½ mm, 5 mm, 5 ½ mm, 6 mm, 6 ½ mm, 7 mm, 7 ½ mm, 8 mm, 8 ½ mm, 9 mm, 9 ½ mm and 10 mm. Any combination of width and thickness may be employed. In one embodiment, a flexible pipe may contain at least one pressure armour layer formed in accordance with the above method.

Alternatively, the steel wire may be used to form a carcass layer. In order to form a carcass layer, at least one steel or corrosion resistant alloy wire may be helically wound at an angle close to 90 degrees, or may comprise adjacent, connected annular ring elements. The steel wire or wires, or ring elements may have a cross-section that enables them to interlock and/or overlap with an adjacent winding or ring element.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification.

## Claims

1. A steel wire comprising the following elements:
0.30 - 0.80 wt % carbon,
0.25 - 0.45 wt% silicon,
0.20 - 0.70 wt% manganese,
0.008 - 0.020 wt% titanium,
0.001 - 0.004 wt% zirconium,
wherein the steel comprises less than 30% allotriomorphic ferrite, preferably less than 15% allotriomorphic ferrite; and wherein the steel comprises at least 50% pearlite microstructure,
wherein the steel further comprises up to 0.012 wt% sulphur;
wherein the steel further comprises up to 0.035 wt% aluminium;
wherein the steel further comprises up to 0.005 wt% nitrogen;
wherein the steel further comprises up to 0.4 wt% of at least one further element selected from chromium, nickel, copper or molybdenum, wherein each of the chromium and nickel is present in an amount of up to 0.5 wt% and wherein the molybdenum is present in an amount of up to 0.1 wt%; and wherein the copper is present in an amount of less than 0.2 wt%;
wherein the steel further comprises up to 0.15 wt% tungsten;
wherein the steel further comprises up to 0.15 wt% vanadium;
wherein the steel further comprises up to 0.15 wt% cobalt;
wherein the steel further comprises up to 0.020 wt% phosphorus;
and wherein the remainder of the steel is iron.

2. The steel wire of claim 1, wherein sulphur is present in an amount of up to 0.010 wt%.

3. The steel wire of any preceding claim, wherein aluminium is present in an amount of up to 0.001 wt%.

4. The steel wire of any preceding claim, wherein nitrogen is present in an amount of up to 0.001 wt%.

5. A flexible pipe comprising a flexible pipe body, wherein the flexible pipe body comprises a least one layer comprising at least one steel wire in accordance with any preceding claim, and at least one end fitting at at least one end of the flexible pipe.

6. The flexible pipe of claim 5, wherein the at least one steel wire is configured to withstanding at least one of tensile loading and loading from internal or external pressures.

7. A method of producing a steel wire of any of claims 1 to 4 for reinforcing a flexible pipe, said method comprising
forming a wire from a steel comprising the following elements:
0.30 - 0.80 wt % carbon,
0.25 - 0.45 wt% silicon,
0.20 - 0.70 wt% manganese,
0.008 - 0.020 wt% titanium,
0.001 - 0.004 wt% zirconium;
wherein the steel further comprises up to 0.012 wt% sulphur;
wherein the steel further comprises up to 0.035 wt% aluminium;
wherein the steel further comprises up to 0.005 wt% nitrogen;
wherein the steel further comprises up to 0.4 wt% of at least one further element selected from chromium, nickel, copper or molybdenum, wherein each of the chromium and nickel is present in an amount of up to 0.5 wt% and wherein the molybdenum is present in an amount of up to 0.1 wt%; and wherein the copper is present in an amount of less than 0.2 wt%;
wherein the steel further comprises up to 0.15 wt% tungsten;
wherein the steel further comprises up to 0.15 wt% vanadium;
wherein the steel further comprises up to 0.15 wt% cobalt;
wherein the steel further comprises up to 0.020 wt% phosphorus;
and wherein the remainder of the steel is iron; and subjecting the wire to at least one heat treatment, wherein the at least one heat treatment comprises heating the wire to a temperature of between 300 °C and 1100 °C, followed by cooling the wire, and wherein the at least one heat treatment comprises heating the wire over a period of between 1 seconds and 12 hours.

8. The method of claim 7, wherein the steel further comprises up to 0.010 wt% sulphur.

9. The method of claim 7 to 8, wherein the steel further comprises up to 0.001 wt% aluminium.

10. The method of any of claims 10 to 12, wherein the steel further comprises up to 0.001 wt% nitrogen.

11. The method of any of claims 7 to 10, wherein the wire is formed by drawing or rolling.

12. The method of any of claims 7 to 11, wherein the method further comprises a shaping step after the at least one heat treatment.

13. The method of any of claims 7 to 12, wherein at least one heat treatment is conducted after the final wire dimensions are achieved.

14. The method of claim 13, wherein said heat treatment conducted after the final wire dimensions are achieved is performed at a temperature of between 150 °C and 700 °C.

15. The method of any of claims 7 to 14, wherein the at least one heat treatment comprises at least one quenching or tempering operation.

16. The method of any of claims 7 to 15, wherein the at least one heat treatment comprises heating the wire to a temperature of between 500 °C and 800 °C, followed by cooling the wire.

17. The method of claim 16, wherein the at least one heat treatment is followed by a lower temperature tempering treatment comprising heating the wire to, or maintaining the wire at a temperature of between 150 °C and 600 °C over a period of between 10 seconds and 10 hours.

18. The method of any of claims 7 to 17, wherein the at least one heat treatment comprises heating the wire over a period of between 10 minutes and 7 hours.

19. A method of producing a layer of a flexible pipe, said method comprising providing at least one steel wire in accordance with any of claims 1 to 4; and
helically winding the at least one steel wire around an underlying layer of flexible pipe body.

## Patentansprüche

1. Stahldraht, umfassend die folgenden Elemente:
zu 0,30 bis 0,80 Gew.-% Kohlenstoff,
zu 0,25 bis 0,45 Gew.-% Silizium,
zu 0,20 bis 0,70 Gew.-% Mangan,
zu 0,008 bis 0,020 Gew.-% Titan,
zu 0,001 bis 0,004 Gew.-% Zirkonium,
wobei der Stahl zu weniger als 30 % allotriomorphen Ferrit, vorzugsweise zu weniger als 15 % allotriomorphen Ferrit, umfasst; und wobei der Stahl zu mindestens 50 % perlitische Mikrostruktur umfasst,
wobei der Stahl ferner bis zu 0,012 Gew.-% Schwefel umfasst;
wobei der Stahl ferner bis zu 0,035 Gew.-% Aluminium umfasst;
wobei der Stahl ferner bis zu 0,005 Gew.-% Stickstoff umfasst;
wobei der Stahl ferner bis zu 0,4 Gew.-% mindestens ein weiteres Element umfasst, das aus Chrom, Nickel, Kupfer oder Molybdän ausgewählt ist, wobei jedes von Chrom und Nickel in einer Menge von bis zu 0,5 Gew.-% vorhanden ist und wobei das Molybdän in einer Menge von bis zu 0,1 Gew.-% vorhanden ist; und wobei das Kupfer in einer Menge von weniger als 0,2 Gew.-% vorhanden ist;
wobei der Stahl ferner bis zu 0,15 Gew.-% Wolfram umfasst;
wobei der Stahl ferner bis zu 0,15 Gew.-% Vanadium umfasst;
wobei der Stahl ferner bis zu 0,15 Gew.-% Cobalt umfasst;
wobei der Stahl ferner bis zu 0,020 Gew.-% Phosphor umfasst;
und wobei der Rest des Stahls Eisen ist.

2. Stahldraht nach Anspruch 1, wobei Schwefel in einer Menge von bis zu 0,010 Gew.-% vorhanden ist.

3. Stahldraht nach einem der vorstehenden Ansprüche, wobei Aluminium in einer Menge von bis zu 0,001 Gew.-% vorhanden ist.

4. Stahldraht nach einem der vorstehenden Ansprüche, wobei Stickstoff in einer Menge von bis zu 0,001 Gew.-% vorhanden ist.

5. Flexibles Rohr, das einen flexiblen Rohrkörper umfasst, wobei der flexible Rohrkörper mindestens eine Schicht umfasst, die mindestens einen Stahldraht gemäß einem der vorstehenden Ansprüche umfasst, und mindestens ein Endstück an mindestens einem Ende des flexiblen Rohres.

6. Flexibles Rohr nach Anspruch 5, wobei der mindestens eine Stahldraht dafür konfiguriert ist, um mindestens einem von Zugbelastung und Belastung von internen oder externen Drücken zu widerstehen.

7. Verfahren zum Herstellen eines Stahldrahts nach einem der Ansprüche 1 bis 4 zum Verstärken eines flexiblen Rohres, wobei das Verfahren Folgendes umfasst Bilden eines Drahtes aus einem Stahl, der die folgenden Elemente umfasst:
zu 0,30 bis 0,80 Gew.-% Kohlenstoff,
zu 0,25 bis 0,45 Gew.-% Silizium,
zu 0,20 bis 0,70 Gew.-% Mangan,
zu 0,008 bis 0,020 Gew.-% Titan,
zu 0,001 bis 0,004 Gew.-% Zirconium;
wobei der Stahl ferner bis zu 0,012 Gew.-% Schwefel umfasst;
wobei der Stahl ferner bis zu 0,035 Gew.-% Aluminium umfasst;
wobei der Stahl ferner bis zu 0,005 Gew.-% Stickstoff umfasst;
wobei der Stahl ferner bis zu 0,4 Gew.-% mindestens ein weiteres Element umfasst, das aus Chrom, Nickel, Kupfer oder Molybdän ausgewählt ist, wobei jedes von Chrom und Nickel in einer Menge von bis zu 0,5 Gew.-% vorhanden ist und wobei das Molybdän in einer Menge von bis zu 0,1 Gew.-% vorhanden ist; und wobei das Kupfer in einer Menge von weniger als 0,2 Gew.-% vorhanden ist;
wobei der Stahl ferner bis zu 0,15 Gew.-% Wolfram umfasst;
wobei der Stahl ferner bis zu 0,15 Gew.-% Vanadium umfasst;
wobei der Stahl ferner bis zu 0,15 Gew.-% Cobalt umfasst;
wobei der Stahl ferner bis zu 0,020 Gew.-% Phosphor umfasst;
und wobei der Rest des Stahls Eisen ist; und
Unterziehen des Drahtes mindestens einer Wärmebehandlung, wobei die mindestens eine Wärmebehandlung das Erwärmen des Drahtes auf eine Temperatur zwischen 300 °C und 1100 °C umfasst, gefolgt von dem Abkühlen des Drahtes, und wobei die mindestens eine Wärmebehandlung das Erwärmen des Drahtes über einen Zeitraum zwischen 1 Sekunden und 12 Stunden umfasst.

8. Verfahren nach Anspruch 7, wobei der Stahl ferner bis zu 0,010 Gew.-% Schwefel umfasst.

9. Verfahren nach Anspruch 7 bis 8, wobei der Stahl ferner bis zu 0,001 Gew.-% Aluminium umfasst.

10. Verfahren nach einem der Ansprüche 10 bis 12, wobei der Stahl ferner bis zu 0,001 Gew.-% Stickstoff umfasst.

11. Verfahren nach einem der Ansprüche 7 bis 10, wobei der Draht durch Ziehen oder Walzen gebildet wird.

12. Verfahren nach einem der Ansprüche 7 bis 11, wobei das Verfahren ferner einen Formgebungsschritt nach der mindestens einen Wärmebehandlung umfasst.

13. Verfahren nach einem der Ansprüche 7 bis 12, wobei mindestens eine Wärmebehandlung nach Erreichen der endgültigen Drahtabmessungen durchgeführt wird.

14. Verfahren nach Anspruch 13, wobei die Wärmebehandlung, die nach dem Erreichen der endgültigen Drahtabmessungen durchgeführt wird, bei einer Temperatur zwischen 150 °C und 700 °C ausgeführt wird.

15. Verfahren nach einem der Ansprüche 7 bis 14, wobei die mindestens eine Wärmebehandlung mindestens einen Abschreck- oder Temperiervorgang umfasst.

16. Verfahren nach einem der Ansprüche 7 bis 15, wobei die mindestens eine Wärmebehandlung das Erwärmen des Drahtes auf eine Temperatur zwischen 500 °C und 800 °C umfasst, gefolgt von dem Abkühlen des Drahtes.

17. Verfahren nach Anspruch 16, wobei die mindestens eine Wärmebehandlung einer Temperierbehandlung mit niedrigerer Temperatur folgt, umfassend das Erwärmen des Drahtes oder Aufrechterhalten des Drahtes bei einer Temperatur zwischen 150 °C und 600 °C über einen Zeitraum von zwischen 10 Sekunden und 10 Stunden.

18. Verfahren nach einem der Ansprüche 7 bis 17, wobei die mindestens eine Wärmebehandlung das Erwärmen des Drahtes über einen Zeitraum zwischen 10 Minuten und 7 Stunden umfasst.

19. Verfahren zum Herstellen einer Schicht eines flexiblen Rohres, wobei das Verfahren das Bereitstellen mindestens eines Stahldrahts gemäß einem der Ansprüche 1 bis 4; und
das spiralförmige Wickeln des mindestens einen Stahldrahts um eine darunterliegende Schicht des flexiblen Rohrkörpers umfasst.

## Revendications

1. Fil d'acier comprenant les éléments suivants :
0,30 à 0,80 % en poids de carbone,
0,25 à 0,45 % en poids de silicium,
0,20 à 0,70 % en poids de manganèse,
0,008 à 0,020 % en poids de titane,
0,001 - 0,004 % en poids de zirconium,
dans lequel l'acier comprend moins de 30 % de ferrite allotriomorphe, de préférence moins de 15 % de ferrite allotriomorphe ; et dans lequel l'acier comprend au moins 50 % de microstructure de perlite,
dans lequel l'acier comprend en outre jusqu'à 0,012 % en poids de soufre ;
dans lequel l'acier comprend en outre jusqu'à 0,035 % en poids d'aluminium ;
dans lequel l'acier comprend en outre jusqu'à 0,005 % en poids d'azote ;
dans lequel l'acier comprend en outre jusqu'à 0,4 % en poids d'au moins un élément supplémentaire choisi parmi le chrome, le nickel, le cuivre ou le molybdène, chacun du chrome et du nickel étant présent en une quantité allant jusqu'à 0,5 % en poids et le molybdène étant présent en une quantité allant jusqu'à 0,1 % en poids ; et dans lequel le cuivre est présent en une quantité inférieure à 0,2 % en poids ;
dans lequel l'acier comprend en outre jusqu'à 0,15 % en poids de tungstène ;
dans lequel l'acier comprend en outre jusqu'à 0,15 % en poids de vanadium ;
dans lequel l'acier comprend en outre jusqu'à 0,15 % en poids de cobalt ;
dans lequel l'acier comprend en outre jusqu'à 0,020 % en poids de phosphore ;
et dans lequel le reste de l'acier est du fer.

2. Fil d'acier selon la revendication 1, dans lequel le soufre est présent en une quantité allant jusqu'à 0,010 % en poids.

3. Fil d'acier selon une quelconque revendication précédente, dans lequel l'aluminium est présent en une quantité allant jusqu'à 0,001 % en poids.

4. Fil d'acier selon une quelconque revendication précédente, dans lequel l'azote est présent en une quantité allant jusqu'à 0,001 % en poids.

5. Tuyau flexible comprenant un corps de tuyau flexible, le corps de tuyau flexible comprenant au moins une couche comprenant au moins un fil d'acier selon une quelconque revendication précédente, et au moins un embout d'extrémité au niveau d'au moins une extrémité du tuyau flexible.

6. Tuyau flexible selon la revendication 5, dans lequel l'au moins un fil d'acier est configuré pour résister à au moins l'un parmi un chargement en traction et un chargement à partir de pressions internes ou externes.

7. Procédé de production d'un fil d'acier selon l'une quelconque des revendications 1 à 4 pour renforcer un tuyau flexible, ledit procédé comprenant
former un fil à partir d'un acier comprenant les éléments suivants :
0,30 à 0,80 % en poids de carbone,
0,25 à 0,45 % en poids de silicium,
0,20 à 0,70 % en poids de manganèse,
0,008 à 0,020 % en poids de titane,
0,001 à 0,004 % en poids de zirconium ;
dans lequel l'acier comprend en outre jusqu'à 0,012 % en poids de soufre ;
dans lequel l'acier comprend en outre jusqu'à 0,035 % en poids d'aluminium ;
dans lequel l'acier comprend en outre jusqu'à 0,005 % en poids d'azote ;
dans lequel l'acier comprend en outre jusqu'à 0,4 % en poids d'au moins un élément supplémentaire choisi parmi le chrome, le nickel, le cuivre ou le molybdène, chacun du chrome et du nickel étant présent en une quantité allant jusqu'à 0,5 % en poids et le molybdène étant présent en une quantité allant jusqu'à 0,1 % en poids ; et dans lequel le cuivre est présent en une quantité inférieure à 0,2 % en poids ;
dans lequel l'acier comprend en outre jusqu'à 0,15 % en poids de tungstène ;
dans lequel l'acier comprend en outre jusqu'à 0,15 % en poids de vanadium ;
dans lequel l'acier comprend en outre jusqu'à 0,15 % en poids de cobalt ;
dans lequel l'acier comprend en outre jusqu'à 0,020 % en poids de phosphore ;
et dans lequel le reste de l'acier est du fer ; et
la soumission du fil à au moins un traitement thermique, l'au moins un traitement thermique comprenant le chauffage du fil à une température comprise entre 300 °C et 1100 °C, suivi par le refroidissement du fil, et l'au moins un traitement thermique comprenant le chauffage du fil sur une période comprise entre 1 seconde et 12 heures.

8. Procédé selon la revendication 7, dans lequel l'acier comprend en outre jusqu'à 0,010 % en poids de soufre.

9. Procédé selon la revendication 7 à 8, dans lequel l'acier comprend en outre jusqu'à 0,001 % en poids d'aluminium.

10. Procédé selon l'une quelconque des revendications 10 à 12, dans lequel l'acier comprend jusqu'à 0,001 % en poids d'azote.

11. Procédé selon l'une quelconque des revendications 7 à 10, dans lequel le fil est formé par étirage ou laminage.

12. Procédé selon l'une quelconque des revendications 7 à 11, dans lequel le procédé comprend en outre une étape de mise en forme après l'au moins un traitement thermique.

13. Procédé selon l'une quelconque des revendications 7 à 12, dans lequel au moins un traitement thermique est effectué après l'obtention des dimensions finales de fil.

14. Procédé selon la revendication 13, dans lequel ledit traitement thermique conduit après l'obtention des dimensions finales de fil est réalisé à une température comprise entre 150 °C et 700 °C.

15. Procédé selon l'une quelconque des revendications 7 à 14, dans lequel l'au moins un traitement thermique comprend au moins une opération de trempe ou de revenu.

16. Procédé selon l'une quelconque des revendications 7 à 15, dans lequel l'au moins un traitement thermique comprend le chauffage du fil à une température comprise entre 500 °C et 800 °C, suivi par le refroidissement du fil.

17. Procédé selon la revendication 16, dans lequel l'au moins un traitement thermique est suivi d'un traitement de revenu de température inférieure comprenant le chauffage du fil jusqu'à, ou le maintien du fil à une température comprise entre 150 °C et 600 °C sur une période comprise entre 10 secondes et 10 heures.

18. Procédé selon l'une quelconque des revendications 7 à 17, dans lequel l'au moins un traitement thermique comprend le chauffage du fil sur une période comprise entre 10 minutes et 7 heures.

19. Procédé de production d'une couche d'un tuyau flexible, ledit procédé comprenant la fourniture d'au moins un fil d'acier selon l'une quelconque des revendications 1 à 4 ; et
l'enroulement de manière hélicoïdale de l'au moins un fil d'acier autour d'une couche sous-jacente de corps de tuyau flexible.
